# EUROPÄISCHE PATENTSCHRIFT

(11) **EP 3 108 536 B1**
(45) Veröffentlichungstag und Bekanntmachung des Hinweises auf die Patenterteilung: **16.10.2019**
(21) Anmeldenummer: 14705539.6
(22) Anmeldetag: 21.02.2014
(51) Int. Cl.: H01Q 1/22, G01F 23/284

(54) **FÜLLSTANDMESSGERÄT MIT OPTIMIERTER ENERGIEVERSORGUNG**
LEVEL INDICATOR FEATURING OPTIMIZED ENERGY SUPPLY
APPAREIL DE MESURE DE NIVEAU DE REMPLISSAGE À ALIMENTATION EN ÉNERGIE OPTIMISÉE

(43) Veröffentlichungstag der Anmeldung: 28.12.2016
(73) Patentinhaber: VEGA Grieshaber KG, 77709 Wolfach (DE)
(72) Erfinder: DIETERLE, Levin, 77709 Wolfach (DE); WELLE, Roland, 77756 Hausach (DE)
(74) Vertreter: Maiwald Patent- und Rechtsanwaltsgesellschaft mbH
(86) Internationale Anmeldenummer: PCT/EP2014/053432
(87) Internationale Veröffentlichungsnummer: WO 2015/124201

(56) Entgegenhaltungen:
- EP-A1- 2 128 576
- EP-A1- 3 105 815
- WO-A1-02/063252
- WO-A1-2012/089438
- DE-A1- 10 149 851
- US-A1- 2011 140 951
- US-A1- 2013 076 559

## Beschreibung

### Gebiet der Erfindung

Die Erfindung betrifft die Füllstandmessung. Insbesondere betrifft die Erfindung eine Antennenvorrichtung zum Anschluss an ein Füllstandmessgerät, ein Füllstandmessgerät mit einer Antennenvorrichtung, die Verwendung einer Antennenvorrichtung oder eines Füllstandmessgeräts zur Bestimmung einer Viskosität einer Flüssigkeit, die Verwendung einer Antennenvorrichtung oder eines derartigen Füllstandmessgeräts zur Bestimmung eines Massestroms eines sich auf einem Förderband befindenden Schüttguts, sowie ein Verfahren zur Bestimmung der Topologie einer Oberfläche eines Füllguts oder eines Schüttguts.

### Hintergrund

Es sind Füllstandmessgeräte und andere Messgeräte, die beispielsweise im Bereich der Objektüberwachung eingesetzt werden, bekannt, welche elektromagnetische Wellen oder Ultraschallwellen in Form eines Sendesignals aussenden, die an der Füllgutoberfläche oder dem entsprechenden Objekt zumindest teilweise reflektiert werden. Das zumindest teilweise reflektierte Sendesignal (Messsignal) kann daraufhin von der Antenneneinheit des Messgeräts aufgenommen und von der damit verbundenen Elektronik ausgewertet werden.

Durch ein Abscannen der Oberfläche des Füllguts oder Objekts ist es möglich, die Topologie der Füllgutoberfläche bzw. des Objekts zu bestimmen. Unter dem Begriff "Topologie" ist im Bereich der Füllstandmessung die Form der Oberfläche des Füllguts oder Schüttguts zu verstehen. In diesem Zusammenhang kann auch der Begriff "Topografie" verwendet werden.

Zur Versorgung der Messgeräte mit elektrischer Energie und zur Übertragung der gewonnenen Daten ein externes Gerät können die Messgeräte mit einer sog. Vier-Leiterschnittstelle ausgerüstet sein.

EP 2 128 576 A1 beschreibt die Bestimmung eines Schüttkegels oder Abzugstrichters durch abscannen einer Schüttgutoberfläche entweder durch mechanische oder elektronische Strahlsteuerung.

WO 02/063252 A1 beschreibt ein Füllstandmessgerät mit einer Energiespeichereinheit in Form eines Kondensators.

### Zusammenfassung der Erfindung

Es ist eine Aufgabe der Erfindung ein Füllstandmessgerät anzugeben, welches die Topologie einer Füllgutoberfläche erfassen kann und Messergebnisse mit hoher Qualität erzeugt.

Diese Aufgabe wird durch die Merkmale der unabhängigen Patentansprüche gelöst. Weiterbildungen der Erfindung ergeben sich aus den abhängigen Patentansprüchen und der folgenden Beschreibung.

Ein erster Aspekt der Erfindung betrifft eine Antennenvorrichtung zum Anschluss an ein Füllstandmessgerät. Die Antennenvorrichtung weist eine Antenneneinheit, eine Antriebsachse und einen ersten Energiespeicher auf.

Die Antenneneinheit ist zum Abstrahlen eines Messsignals in Richtung einer Füllgutoberfläche oder Schüttgutoberfläche und zum Empfang des an der Füllgut-/Schüttgutoberfläche reflektierten Messsignals ausgeführt.

Bei der Messung wird die Antenneneinheit von einer Antriebsachse um die Längsachse der Antriebsachse in Rotation versetzt. Der erste Energiespeicher dient der Versorgung der Antennenvorrichtung mit der für den Betrieb der Antennenvorrichtung erforderlichen elektrischen Energie. Dieser Betrieb kann neben der Erzeugung, der Abstrahlung und dem Empfang des Sendesignals auch zumindest teilweise die sich daran anschließende Signalverarbeitung umfassen.

Hierfür ist der erste Energiespeicher an der Antennenvorrichtung angebracht, beispielsweise direkt auf der Rückseite der Antenneneinheit, so dass er mit der Antenneneinheit mitrotiert, wenn diese von der Antriebsachse in Rotation versetzt wird.

Bei der Antenneneinheit handelt es sich beispielsweise um ein Array aus einzelnen Strahlerelementen, welches zum Abstrahlen des Messsignals und zum Empfang des reflektierten Messsignals ausgeführt ist.

Die Strahlerelemente des Arrays können in einer Ebene angeordnet sein, welche beispielsweise mit der Rotationsachse der Antenneneinheit einen Winkel α einschließt, der ungleich 90 Grad beträgt. Beispielsweise beträgt der Winkel α zwischen 30 und 60 Grad, beispielsweise 45 Grad.

Durch das Vorsehen eines Winkels α von ungleich 90 Grad zur senkrechten, direkten Verbindungslinie zwischen der Antenne und der Füllgutoberfläche kann der Messbereich der Antenne vergrößert werden. Diese Vergrößerung des Messbereichs bedeutet, dass die Topographie der Füllgutoberfläche für einen großen Bereich an Füllständen mit hoher Qualität erfasst werden kann.

Die Rotationsachse (Längsrichtung der Antriebsachse) kann beispielsweise eine vertikale Rotationsachse sein, wenn die Antennenvorrichtung an dem Füllstandmessgerät montiert ist und das Füllstandmessgerät in oder an einem Behälter, der das Füllgut enthält, installiert ist.

Bei den Strahlerelementen handelt es sich beispielsweise um im Wesentlichen zweidimensionale, flächig ausgebildete Patches. Die Strahlerelemente können aber auch in Form von anderweitig ausgebildeten Strahlern vorgesehen sein.

Das Array ist beispielsweise ein eindimensionales Array mit einer einzelnen Spalte an Strahlerelementen. Das Array kann aber auch ein zweidimensionales Array mit mehreren parallel zueinander angeordneten Spalten und mehreren senkrecht dazu angeordneten Zeilen, die sich jeweils aus den einzelnen Strahlerelementen zusammensetzen, ausgeführt sein.

Gemäß einer Ausführungsform der Erfindung weist die Antennenvorrichtung eine Hochfrequenzeinheit zum Erzeugen eines Messsignals auf, wobei die Hochfrequenzeinheit in die Antenneneinheit integriert ist oder daran angebracht ist. Die Hochfrequenzeinheit kann auch in die Antriebseinheit der Antriebsachse integriert sein.

Gemäß einer weiteren Ausführungsform der Erfindung weist die Antennenvorrichtung eine Auswerteelektronik auf, die zusammen mit der Antenneneinheit rotiert, wenn die Antenneneinheit von der Antriebseinheit in Rotation versetzt wird.

Beispielsweise befindet sich die Auswerteelektronik auf der Rückseite der Antenneneinheit, also auf der dem Füllgut abgewandten Seite.

Gemäß einer weiteren Ausführungsform der Erfindung ist die Auswerteelektronik in die Antenneneinheit oder in die Antriebseinheit integriert.

Gemäß einem weiteren Aspekt der Erfindung ist ein Füllstandmessgerät zur Erfassung einer Topologie vorgesehen, wobei das Füllstandmessgerät seine hierzu benötigte Energie ausschließlich über eine Zweileiterverbindung bezieht, und wobei die Zweileiterleitung zur Kommunikation, insbesondere zur Ausgabe zumindest eines Topologiemesswertes oder eines daraus abgeleiteten Messwertes (z.B. der Masse im Behälter) ausgeführt ist.

Gemäß einer Ausführungsform der Erfindung ist das Füllstandmessgerät zur Bestimmung eines Füllstands eines Füllguts und zur Bestimmung der Topologie der Oberfläche des Füllguts (oder eines Schüttguts) ausgeführt. Nach der Bestimmung der Topologie der Oberfläche kann der Füllstand mit größerer Genauigkeit bestimmt werden. Das Füllstandmessgerät weist einen Grundkörper mit einer Energieversorgungs- und Kommunikationseinheit zur Energieversorgung des Messgeräts und zur Kommunikation mit einem externen Gerät auf. Weiterhin ist ein elektrischer Motor vorgesehen, der ebenfalls im oder am Grundkörper angebracht sein kann.

Darüber hinaus weist das Füllstandmessgerät eine oben und im Folgenden beschriebene Antennenvorrichtung auf. Die Antriebsachse der Antennenvorrichtung kann an den elektrischen Motor des Grundkörpers angeschlossen werden, wenn die Antennenvorrichtung an dem Füllstandmessgerät angebracht wird. Somit kann also der elektrische Motor die Antriebsachse und somit die Antenneneinheit in Rotation versetzen.

Gemäß einer weiteren Ausführungsform der Erfindung weist das Füllstandmessgerät eine Energieversorgungs- und Kommunikationsschnittstelle zum Anschluss der Energieversorgungs- und Kommunikationseinheit an eine Zweidrahtleitung oder eine Vierdrahtleitung, über welche das Füllstandmessgerät mit der für den Messbetrieb notwendigen Energie versorgt werden kann und über welche Messdaten von dem Füllstandmessgerät an eine entfernte Steuereinheit übertragen werden können, auf.

Gemäß einer weiteren Ausführungsform der Erfindung weist das Füllstandmessgerät ein erstes Stator-Rotor-Spulenpaar auf, welches zum drahtlosen Übertragen der zum Laden des ersten Energiespeichers erforderlichen Energie von der Energieversorgungs- und Kommunikationseinheit des Grundkörpers an die Antennenvorrichtung ausgeführt ist. In anderen Worten kann also die Ladeenergie drahtlos übertragen werden. Das ist vorteilhaft, da die Antennenvorrichtung gegenüber dem Grundkörper rotieren soll, während die Messung stattfindet.

Gemäß einer weiteren Ausführungsform der Erfindung weist das Füllstandmessgerät ein zweites Stator-Rotor-Spulenpaar zum drahtlosen Übertragen der von der Antennenvorrichtung empfangenen Messsignale von der Antennenvorrichtung an die Energieversorgungs- und Kommunikationseinheit des Grundkörpers auf. Schleifkontakte sind somit nicht erforderlich.

Gemäß einer weiteren Ausführungsform der Erfindung weist das Füllstandmessgerät einen zweiten Energiespeicher zur Versorgung des elektrischen Motors mit der zur Rotation der Antenneneinheit erforderlichen Energie auf. Der zweite Energiespeicher ist beispielsweise im Grundkörper des Füllstandmessgeräts und insbesondere im stationären Teil des Füllstandmessgeräts angeordnet.

Gemäß einer weiteren Ausführungsform der Erfindung ist die Energieversorgungs- und Kommunikationseinheit des Grundkörpers zum Laden des ersten und des zweiten Energiespeichers vor Beginn einer Messung ausgeführt. Das Füllstandmessgerät kann derart programmiert sein, dass die Messung erst dann ausgeführt wird, wenn beide Energiespeicher ausreichend geladen sind, so dass die eigentliche Topologie- und/oder Füllstandmessung ausgeführt werden kann, ohne dass hierfür eine externe Energieversorgung notwendig ist, da die hierfür erforderliche Energie alleine durch die beiden Energiespeicher bereitgestellt wird.

Gemäß einem weiteren Aspekt der Erfindung ist die Verwendung einer oben und im Folgenden beschriebenen Antennenvorrichtung oder eines oben und im Folgenden beschriebenen Füllstandmessgeräts zur Bestimmung weiterer physikalischer Kenngrößen einer bewegten Flüssigkeit angegeben. Beispielsweise kann die Viskosität und/oder Dichte einer bewegten Flüssigkeit bei bekannter Rührergeometrie und Rührerdrehzahl über die Topologie der Flüssigkeitsoberfläche bestimmt werden.

Gemäß einem weiteren Aspekt der Erfindung ist die Verwendung einer oben und im Folgenden beschriebenen Antennenvorrichtung oder eines oben und im Folgenden beschriebenen Füllstandmessgeräts zur Bestimmung eines Massestroms eines sich auf einem Förderband befindenden Schüttguts angegeben.

Gemäß einem weiteren Aspekt der Erfindung ist ein Verfahren zur Bestimmung der Topologie einer Oberfläche eines Füllguts oder Schüttguts angegeben. Zunächst wird ein erster Energiespeicher, der in einem rotierbaren Bereich eines Füllstandmessgeräts angeordnet ist, geladen. Davor, gleichzeitig oder danach wird ein zweiter Energiespeicher, der in einem stationären Bereich des Füllstandmessgeräts angeordnet ist, geladen. Die für die Ladevorgänge erforderliche Energie kann über eine externe Energieversorgung bereitgestellt werden.

Danach wird die Antenneneinheit des Füllstandmessgeräts unter Verwendung der im zweiten Energiespeicher gespeicherten elektrischen Energie rotiert. Während der Rotation der Antenneneinheit erfolgt ein Erzeugen und Aussenden eines Messsignals unter Verwendung der im ersten Energiespeicher gespeicherten Energie. Das an der Oberfläche des Füllguts oder Schüttguts reflektierte Messsignal wird daraufhin von der Antenneneinheit empfangen und eine Recheneinheit, die auch als Signalverarbeitungseinheit bezeichnet wird, berechnet aus den empfangenen Messdaten die Topologie der Füllgutoberfläche, indem das reflektierte, empfangene Messsignal ausgewertet wird.

Die sich aus der Berechnung ergebenden Messwerte können dann an eine entfernt angeordnete Steuereinheit über eine Zweidrahtleitung übertragen werden, über welche die Energiespeicher auch mit der für den Messbetrieb notwendigen Energie versorgt werden.

Alternativ oder zusätzlich zur Zweidrahtleitung kann auch eine andersartige Kommunikationsverbindung vorgesehen sein. Insbesondere kann auch eine Funkübertragung der Daten vorgesehen sein. In diesem Fall weist das Messgerät ein Funkkommunikationsmodul auf.

Im Folgenden werden mit Verweis auf die Figuren Ausführungsbeispiele der Erfindung beschrieben.

### Kurze Beschreibung der Figuren

Fig. 1 zeigt ein Füllstandmessgerät, das an einem Behälter installiert ist.
Fig. 2 zeigt ein Füllstandmessgerät gemäß einem Ausführungsbeispiel der Erfindung.
Fig. 3 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Die vorliegende Erfindung kann in Verbindung mit Füllstandmessgeräten verwendet werden, welche zumindest eine während einer Messung mechanisch um eine oder mehrere Achsen rotierende Sende- und/oder Empfangseinheit, im Folgenden als Antenneneinheit bezeichnet, aufweisen. Im besonderen Interesse stehen hierbei Radar-Füllstandmessgeräte, welche durch mechanische Rotation der Sende- und/oder Empfangseinheit Echokurven aus unterschiedlichen Raumrichtungen im Behälter erfassen und aus den daraus abgeleiteten Kennwerten den Verlauf der Oberfläche des Füllguts (Topologie) im Behälter errechnen. Die Topologie kann vom Messgerät direkt ausgegeben werden oder aber in einen weiteren Kennwert, beispielsweise das im Behälter enthaltene Volumen oder die im Behälter enthaltene Masse an Füllgut, umgerechnet werden.

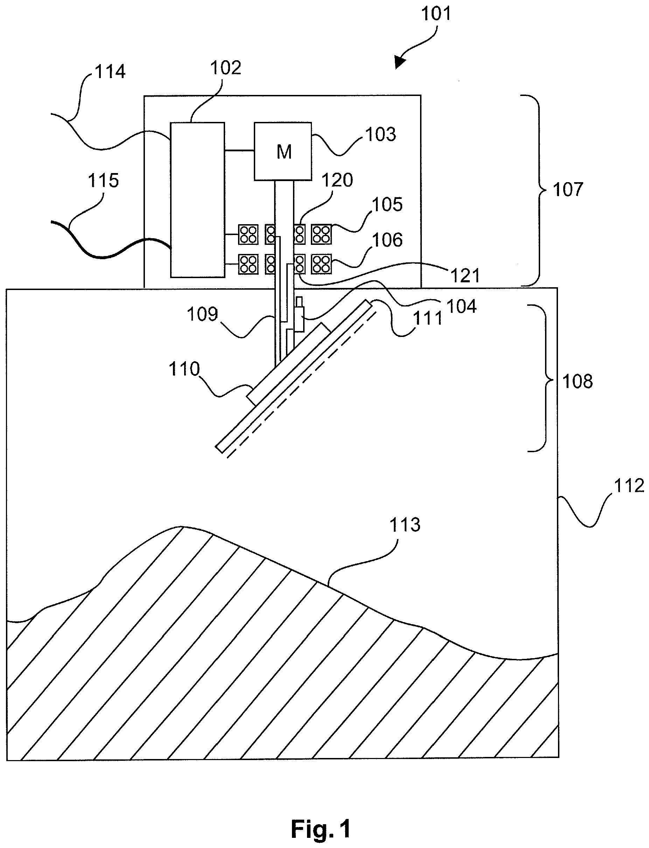

Fig. 1 zeigt ein Füllstandmessgerät 101, welches durch Aussenden eines elektromagnetischen oder akustischen Signals in Richtung einer Füllgutoberfläche 113 ein Abbild der Reflexionsverhältnisse im Behälter 112 erfasst. Insbesondere kann das Füllstandmessgerät aus dem an der Oberfläche 113 reflektierten Messsignal die Topologie der Füllgutoberfläche berechnen.

Das Füllstandmessgerät 101 enthält eine Energieversorgungs- und Kommunikationseinheit 102, einen elektrischen Motor 103, einen Drehgeber 104, zur Bestimmung der Orientierung der Sende-und/oder Empfangseinheit relativ zum Behälter 112 und somit der Zuordnung von Messdaten (Abstandsdaten) zu der zu bestimmenden Topographie, sowie je ein Stator-Rotor-Spulenpaar zur Übertragung von Energie (Spulenpaar 105, 120) und zur Übertragung von Informationen (Spulenpaar 106, 121) zwischen dem "stationären" Bereich 107 des Füllstandmessgeräts und dem "rotierenden" Bereich 108 ("Rotor").

Der rotierende Bereich des Füllstandmessgeräts weist zumindest eine Drehachse 109 auf, an welcher eine Hochfrequenz- und Signalverarbeitungseinheit 110 sowie eine Sende- und/oder Empfangseinheit 111, beispielsweise in Form einer Planarantenne, befestigt ist. In diesem Zusammenhang sei angemerkt, dass die Drehachse 109 des rotierenden Bereichs 108 teilweise in den stationären Bereich 107 eingeschoben sein kann, um dort an den Motor 103 anzukoppeln.

Während des Betriebs des Füllstandmessgeräts wird der elektrische Motor 103 von der Energieversorgungseinheit 102 mit elektrischer Energie versorgt, woraufhin der Rotor 108 des Messgeräts in eine Rotationsbewegung versetzt wird. Gleichzeitig überträgt die Energieversorgungseinheit 102 mithilfe des ersten Stator-Rotor-Spulenpaares 105, 120 Energie zum Rotor, und hier insbesondere zur Hochfrequenzeinheit der Hochfrequenz- und Signalverarbeitungseinheit 110.

Die Hochfrequenzeinheit, welche beispielsweise auf der Rückseite der Antenneneinheit 111 angebracht ist, erfasst im Zusammenspiel mit der Signalverarbeitungseinheit der Hochfrequenz- und Signalverarbeitungseinheit 110 die Reflexionsverhältnisse in verschiedenen Bereichen des Behälters 112, und hier insbesondere im Bereich der Füllgutoberfläche 113. Daraufhin kann die Signalverarbeitungseinheit (weiter oben auch als Auswerteelektronik bezeichnet) die Topologie der Füllgutoberfläche oder daraus abgeleitete Kennwerte ermitteln, und über das zweite Stator-Rotor-Spulenpaar 106 zurück an die Kommunikationseinheit 102 übermitteln. Die Kommunikationseinheit (welche im Übrigen auch zur Regelung der Energieversorgung ausgeführt sein kann und in diesem Zusammenhang dann als Energieversorgungs- und Kommunikationseinheit bezeichnet wird) kann dann die ermittelten Werte an eine externe Einheit übertragen.

Zu diesem Zwecke dient eine an der Kommunikationseinheit 102 verfügbare Kommunikationsschnittstelle 115, beispielsweise eine analoge Schnittstelle (4...20mA-Schnittstelle), oder aber auch eine digitale Schnittstelle (HART, Profibus, USB, Ethernet, WLAN, GSM).

Da der Betrieb des elektrischen Motors 103 zeitlich parallel zum Betrieb der Hochfrequenz- und Signalverarbeitungseinheit 110 erfolgen muss, lässt sich die zur Messung benötigte elektrische Leistung nicht beliebig reduzieren. Insbesondere ist es nicht möglich, das Messgerät an eine 4...20 mA-Stromschnittstelle in Zweileitertechnik, über welche das Messgerät mit Energie versorgt wird (Loop-Powered), zu betreiben, da in diesem Fall die über die Schnittstelle beziehbare elektrische Leistung nicht ausreicht.

Aus diesem Grunde ist das Messgerät 101 der Fig. 1 in Vier-Leiter-Technik ausgeführt.

Die zusätzlich zum Betrieb des Messgeräts benötigte elektrische Leistung wird über ein zweites Leiterpaar 114 von außen zugeführt.

Im Falle der hier dargestellten kontaktlosen Energieübertragung von der Stator- zur Rotoreinheit wird beispielsweise eine Wechselspannung im Bereich einiger Kilohertz von der Energieversorgungseinheit 102 in der Statorspule 105 erzeugt, welche wiederum eine Wechselspannung im Bereich einiger Kilohertz in der Rotorspule 120 induziert. Gleichzeitig muss die Hochfrequenzeinheit 110, welche sich in räumlicher Nähe zu der Rotorspule 105 befindet, die von der Füllgutoberfläche 113 reflektierten Signale erfassen. Insbesondere bei FMCW-Systemen kann in diesem Zusammenhang die Erzeugung eines die Reflexionsverhältnisse abbildenden Zwischenfrequenzsignals im Bereich von 0 Hz bis typischerweise 500 kHz vorgesehen sein. Da sich die Frequenzspektren der Energieübertragung und der Messdatenerfassung folglich überschneiden, kann es zu größeren Messungenauigkeiten kommen, da das Zwischenfrequenzsignal durch die elektromagnetischen Einflüsse der Energieübertragung über die Spulen 105, 120 verfälscht werden kann.

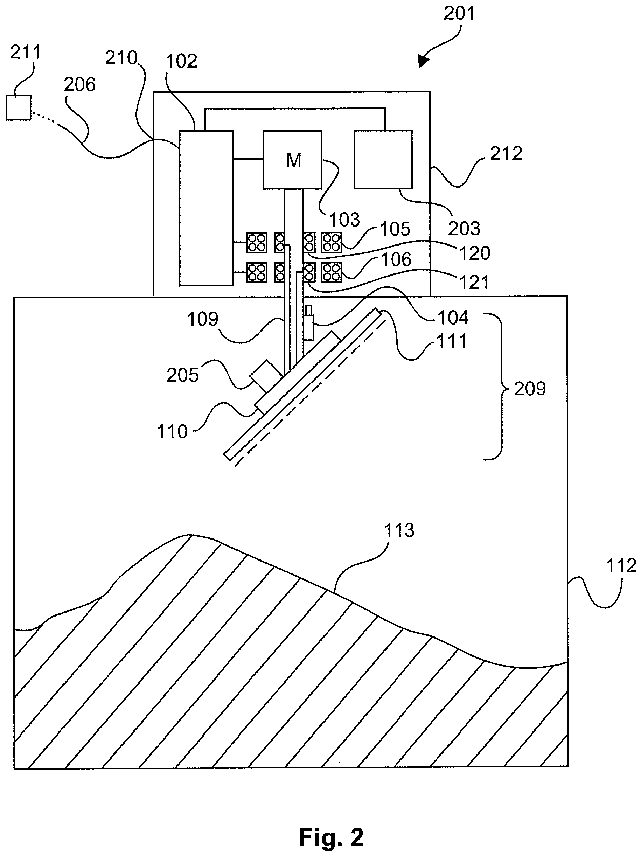

Es wird im Folgenden eine Vorrichtung zur energiesparenden Messung der Topologie eines Mediums beschrieben, welche die Realisierung eines entsprechenden Messgeräts in Zweileitertechnik (Loop-Powered) ermöglicht und die zuvor beschriebenen Nachteile der kontaktlosen Energieübertragung in Bezug auf die Störung des Messsignals reduziert oder gar beseitigt. Fig. 2 zeigt ein Ausführungsbeispiel einer entsprechenden Messvorrichtung.

Das Messgerät 201 kann derart ausgeführt sein, dass seine gesamte Betriebsenergie aus einer kombinierten Energieversorgungs- und Kommunikationsleitung 206, welche mit einer entfernten Steuereinheit 211 verbunden ist, bezogen wird. Bei der kombinierten Energieversorgungs- und Kommunikationsleitung 206 handelt es sich beispielsweise um eine Zweileiterverbindung mit analoger 4...20 mA Kommunikation.

Da die über diese Schnittstelle bereitgestellte Versorgungsleistung (typischerweise 40 mW bei 10 V Spannung) zum direkten Betrieb des Füllstandmessgeräts 201 möglicherweise nicht ausreicht, nutzt die Energieversorgungs- und Kommunikationseinheit 102 die bereitgestellte Leistung zunächst dazu, zumindest einen auf dem rotierbaren Bereich 108 des Füllstandmessgeräts befindlichen ersten Energiespeicher 205, beispielsweise einen Kondensator oder einen Akkumulator, zu laden.

Für die Energieübertragung zwischen Statorteil und Rotorteil wird wiederum das erste Spulenpaar 105, 120 verwendet. Weiterhin kann die Energieversorgungs- und Kommunikationseinheit 102 dazu ausgeführt sein, in einem zweiten Schritt die zur Verfügung gestellte elektrische Leistung dazu zu nutzen, einen zweiten, im Statorbereich des Füllstandmessgeräts befindlichen Energiespeicher 203 zu laden. Energieversorgungs- und Kommunikationseinheit 102, Motor 103, zweiter Energiespeicher 203 und die beiden Stator-Rotor-Spulenpaare 105, 120 und 106, 121 befinden sich im Grundkörper 212 des Füllstandmessgeräts. Der Grundkörper weist eine Schnittstelle 210 auf, über welche die Energieversorgungs- und Kommunikationseinheit 102 an die Zweidrahtleitung 206 angeschlossen werden kann.

Im ersten Zeitraum des Sammelns von elektrischer Energie befindet sich sowohl die Hochfrequenzeinheit als auch die Signalverarbeitungseinheit in einem energiesparenden Modus (sog. Power-down Modus), in welchen sie zuvor von der Energieversorgungs- und Kommunikationseinheit 102 im Rahmen einer Kommunikation mittels des zweiten Stator-Rotor-Spulenpaares 106, 121 versetzt worden sind.

Zudem kann der elektrische Motor 103 deaktiviert sein, um die zuvor beschriebene Phase des Energiesammelns nicht unnötig zu verlängern.

Stellt die Energieversorgungs- und Kommunikationseinheit 102 fest, dass beide Energiespeicher 203, 205 ausreichend geladen sind, so aktiviert diese, falls nun eine neue Messung durchgeführt werden soll, über die vorhandene Kommunikationsschnittstelle 106, 121 die Hochfrequenz- und Signalverarbeitungseinheit 110.

Gleichzeitig wird der Elektromotor 103 aktiviert, woraufhin dieser die Antenneneinheit einmal oder mehrmals um die Antriebsachse 109 dreht.

Während dieser Phase wird die zum Betrieb der jeweiligen Komponenten benötigte Versorgungsleistung aus dem stationären Energiespeicher 203 und dem rotierenden Energiespeicher 205 entnommen. Es ist somit nicht notwendig, die Energieversorgungsspulen 105, 120 während der Messung mit hochfrequenten Signalen anzusteuern.

Nach Abschluss der Messung deaktiviert die Energieversorgungs- und Kommunikationseinheit 102 sowohl den Motor 103 als auch die Hochfrequenzeinheit der Hochfrequenz- und Signalverarbeitungseinheit 110.

Die Signalverarbeitungseinheit der Hochfrequenz- und Signalverarbeitungseinheit 110 berechnet daraufhin die Topologie der Oberfläche 113 des Füllguts oder Schüttguts und übermittelt die Ergebniswerte zurück an die Energieversorgungs- und Kommunikationseinheit 102.

Während dieser Phase ist es in einer Ausführungsvariante vorgesehen, erneut Energie über die Energieversorgungsspulen 105, 120 von der Statoreinheit zur Rotoreinheit zu übertragen, da die störanfällige Datenerfassung im Rahmen der Hochfrequenzmessung bereits beendet ist.

Die Signalverarbeitungseinheit der Hochfrequenz- und Signalverarbeitungseinheit 110 stellt den oder die ermittelten Werte bis zur Aktualisierung im nächsten Messdurchlauf, in welchem neue Werte ermittelt werden, nach außen hin bereit, beispielsweise über die Versorgungsleitung 206. Dies erfolgt beispielsweise in analoger Weise (4...20mA) und/oder in digitaler Weise (HART).

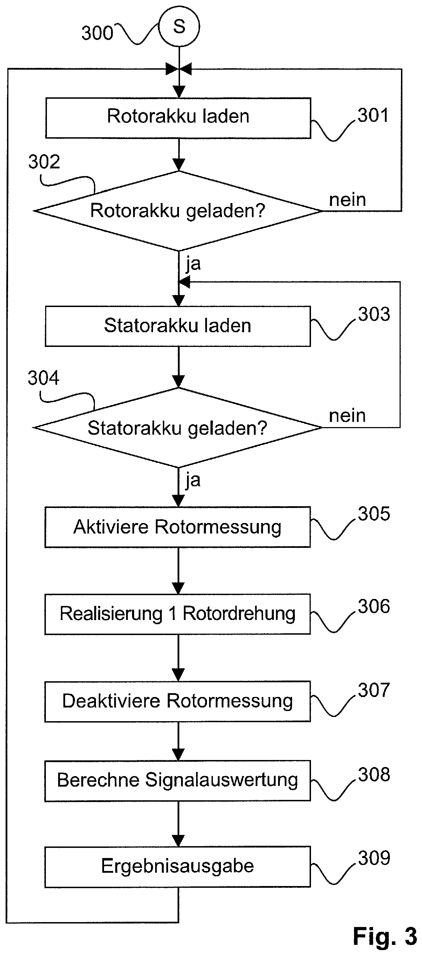

Fig. 3 zeigt ein Flussdiagramm eines Verfahrens gemäß einem Ausführungsbeispiel der Erfindung. Das Verfahren eignet sich zum Betrieb des oben beschriebenen Messgeräts 201. Das Verfahren beginnt im Startzustand 300. In Schritt 301 wird zunächst der Rotorakkumulator 205 (erster Energiespeicher) geladen. In Schritt 303 wird anschließend der Stator-Akkumulator 203 (zweiter Energiespeicher) geladen. Diese Vorgänge können auch in umgekehrter Reihenfolge oder gleichzeitig erfolgen.

Ist auch der Stator-Akkumulator mit ausreichender Energie befüllt, so wird in Schritt 305 die Messung im Rotorteil aktiviert. In Schritt 306 wird zusätzlich die Drehung des Rotors aktiviert. Währenddessen werden die eigentlichen Messdaten von der Hochfrequenz- und Signalverarbeitungseinheit 110 erfasst.

In Schritt 307 wird die Messung deaktiviert (indem der Rotor und die Hochfrequenzeinheit abgeschaltet werden), woraufhin in Schritt 308 die Signalverarbeitung die zu ermittelnden Werte (Topologie, Masse, Volumen und/oder Füllstand) ermittelt.

Nach Abschluss dieser Ermittlung werden die Ergebnisse im letzten Schritt 309 an die Kommunikationseinheit 202 übertragen und über die Versorgungsleitung 206 ausgegeben. Die Signalverarbeitungseinheit 110 wird danach deaktiviert und das Verfahren beginnt wieder mit dem Laden der Energiespeicher (Schritt 301).

Der hier beschriebene Ablauf stellt eine beispielhafte Abfolge von Schritten dar, die im Messgerät ausgeführt werden können. Selbstverständlich sind andere Abfolgen möglich, beispielsweise das parallele Laden der beiden Energiespeicher, oder das Einfügen weiterer Ladezyklen unter Deaktivierung leistungsintensiver Baugruppen, beispielsweise zwischen der Erfassung der Daten und der Berechnung der Ergebnisse mithilfe der Signalverarbeitungseinheit. Zudem kann es möglich sein, durch den Einsatz eines besonders energiesparenden Motors einen direkten Betrieb aus der aktuell vom Sensor (Messgerät) über die Versorgungsleitung 206 bezogenen Energie zu realisieren, wobei der Energiespeicher 205 weiterhin für die Versorgung der Hochfrequenz- und Signalverarbeitungseinheit 110 genutzt wird. Der Energiespeicher 203 kann in diesem Fall entfallen.

Weiterhin sei darauf hingewiesen, dass die Übertragung der Energie und der Informationen vom Stator 107 zum Rotor 108 mithilfe von Spulen nur eine mögliche Variante darstellt.

Das Messgerät weist auf seiner rotierenden Einheit einen Energiespeicher auf, welcher in einem ersten Zeitraum aufgeladen wird, und welcher während der Messung die benötigte Energie für die Hochfrequenzeinheit bereitstellt. Hierdurch entfällt die Notwendigkeit der drahtlosen Energieübertragung auf den rotierenden Sensorteil während der Messung, was die Verfälschung der Messung durch EMV-Störungen verhindern oder zumindest reduzieren kann.

## Patentansprüche

1. Antennenvorrichtung zum Anschluss an ein Füllstandmessgerät (201), die Antennenvorrichtung aufweisend:
eine Antenneneinheit (111) zum Abstrahlen eines Messsignals in Richtung einer Füllgutoberfläche und zum Empfang des an der Füllgutoberfläche reflektierten Messsignals;
eine Antriebsachse (109) zum Rotieren der Antenneneinheit um die Antriebsachse während des Abstrahlens des Messsignals;
einen ersten Energiespeicher (205) zur Versorgung der Antennenvorrichtung mit der für deren Betrieb erforderlichen elektrischen Energie;
wobei die Antenneneinheit ein Array an Strahlerelementen aufweist, welches zum Abstrahlen des Messsignals und zum Empfang des reflektierten Messsignals ausgeführt ist; und
wobei der erste Energiespeicher an der Antennenvorrichtung angebracht ist, so dass er mit der Antenneneinheit mit rotiert, wenn diese von der Antriebsachse in Rotation versetzt wird.

2. Antennenvorrichtung nach Anspruch 1, weiter aufweisend:
eine Hochfrequenzeinheit (110) zum Erzeugen des Messsignals.

3. Antennenvorrichtung nach Anspruch 2,
wobei die Hochfrequenzeinheit (110) in die Antenneneinheit (111) integriert ist oder an der Antenneneinheit angebracht ist.

4. Füllstandmessgerät (201) zur Bestimmung der Topologie einer Oberfläche eines Füllguts oder Schüttguts, aufweisend:
einen Grundkörper (212) mit einer Energieversorgungs- und Kommunikationseinheit (102) und einem elektrischen Motor (103);
eine Antennenvorrichtung nach einem der Ansprüche 1 bis 3;
wobei die Antriebsachse (109) der Antennenvorrichtung zum Anschluss an den elektrischen Motor ausgeführt ist.

5. Füllstandmessgerät (201) nach Anspruch 4, weiter aufweisend:
eine Energieversorgungs- und Kommunikationsschnittstelle (210) zum Anschluss der Energieversorgungs- und Kommunikationseinheit (102) an eine Zweidrahtleitung, über welche das Füllstandmessgerät (201) mit der für den Messbetrieb notwendigen Energie versorgt werden kann und über welche Messdaten an eine entfernte Steuereinheit (211) übertragen werden können.

6. Füllstandmessgerät (201) nach Anspruch 4 oder 5, weiter aufweisend:
ein erstes Stator-Rotor-Spulenpaar (105, 120) zum drahtlosen Übertragen der zum Laden des ersten Energiespeichers (205) erforderlichen Energie von der Energieversorgungs- und Kommunikationseinheit (102) des Grundkörpers (212) an die Antennenvorrichtung.

7. Füllstandmessgerät (201) nach einem der Ansprüche 4 bis 6, weiter aufweisend:
ein zweites Stator-Rotor-Spulenpaar (106) zum drahtlosen Übertragen der von der Antennenvorrichtung empfangenen Messsignale von der Antennenvorrichtung an die Energieversorgungs- und Kommunikationseinheit (102) des Grundkörpers (212).

8. Füllstandmessgerät (201) nach einem der Ansprüche 4 bis 7, weiter aufweisend:
einen zweiten Energiespeicher (203) zur Versorgung des elektrischen Motors (103) mit der zur Rotation der Antenneneinheit (111) erforderlichen Energie.

9. Füllstandmessgerät (201) nach einem der Ansprüche 4 bis 8,
wobei die Energieversorgungs- und Kommunikationseinheit (102) des Grundkörpers (212) zum Laden des ersten Energiespeichers (205) und des zweiten Energiespeichers (203) vor Beginn einer Messung ausgeführt ist.

10. Verwendung einer Antennenvorrichtung nach einem der Ansprüche 1 bis 3 oder eines Füllstandmessgeräts nach einem der Ansprüche 4 bis 9 zur Bestimmung einer Viskosität und/oder Dichte einer bewegten Flüssigkeit.

11. Verwendung einer Antennenvorrichtung nach einem der Ansprüche 1 bis 3 oder eines Füllstandmessgeräts nach einem der Ansprüche 4 bis 9 zur Bestimmung eines Massestroms eines sich auf einem Förderband befindenden Schüttguts.

12. Verfahren zur Bestimmung der Topologie einer Oberfläche eines Füllguts oder Schüttguts, das Verfahren aufweisend die Schritte:
Laden eines ersten Energiespeichers (205), der in einem rotierbaren Bereichs eines Füllstandmessgeräts (201) angeordnet ist;
Laden eines zweiten Energiespeichers (203), der in einem stationären Bereich des Füllstandmessgeräts angeordnet ist;
Rotieren einer Antenneneinheit (111) des Füllstandmessgeräts unter Verwendung der im zweiten Energiespeicher gespeicherten Energie;
Erzeugen und Aussenden eines Messsignals unter Verwendung der im ersten Energiespeicher gespeicherten Energie;
Empfangen des an der Oberfläche reflektierten Messsignals;
Berechnen der Topologie der Oberfläche aus dem reflektierten Messsignal.

13. Verfahren nach Anspruch 12, weiter aufweisend den Schritt:
Übertragen von sich aus der Berechnung ergebenden Messwerten an eine entfernt angeordnete Steuereinheit über eine Datenleitung, über welche die Energiespeicher (203, 205) mit der für den Messbetrieb notwendigen Energie versorgt werden.

## Claims

1. Antenna apparatus for connection to a fill level measurement device (201), the antenna apparatus comprising:
an antenna unit (111) for emitting a measurement signal towards a filling material surface and for receiving the measurement signal reflected from the filling material surface;
a drive shaft (109) for rotating the antenna unit about the drive axis while the measurement signal is being emitted;
a first energy store (203) for supplying the antenna apparatus with the electrical energy required for the operation thereof,
wherein the antenna unit comprises an array of radiator elements, which is designed to emit the measurement signal and to receive the reflected measurement signal; and
wherein the first energy store is attached to the antenna apparatus such that it rotates with the antenna unit when said unit is rotated by the drive shaft.

2. Antenna apparatus according to claim 1, further comprising:
a high-frequency unit (110) for generating the measurement signal.

3. Antenna apparatus according to claim 2,
wherein the high-frequency unit (110) is integrated in the antenna unit (111) or attached to the antenna unit.

4. Fill level measurement device (201) for determining the topology of a surface of a filling material or bulk material, comprising:
a main body (212) having a power supply and communications unit (102) and an electric motor (103);
an antenna apparatus according to any of claims 1 to 3;
wherein the drive shaft (109) of the antenna apparatus is designed for connection to the electric motor.

5. Fill level measurement device (201) according to claim 4, further comprising:
a power supply and communications interface (210) for connecting the power supply and communications unit (102) to a two-wire line, by means of which it is possible to supply the fill level measurement device (201) with the energy needed for the measurement operation and by means of which measurement data can be transmitted to a remote control unit (211).

6. Fill level measurement device (201) according to either claim 4 or claim 5, further comprising:
a first stator-rotor pair of coils (105, 120) for wirelessly transmitting the energy required for charging the first energy store (205) from the power supply and communications unit (102) of the main body (212) to the antenna apparatus.

7. Fill level measurement device (201) according to any of claims 4 to 6, further comprising:
a second stator-rotor pair of coils (106) for wirelessly transmitting the measurement signals received by the antenna apparatus from the antenna apparatus to the power supply and communications unit (102) of the main body (212).

8. Fill level measurement device (201) according to any of claims 4 to 7, further comprising:
a second energy store (203) for supplying the electric motor (103) with the energy required for rotating the antenna unit (111).

9. Fill level measurement device (201) according to any of claims 4 to 8,
wherein the power supply and communications unit (102) of the main body (212) is designed to charge the first energy store (205) and the second energy store (203) before the start of a measurement.

10. Use of an antenna apparatus according to any of claims 1 to 3 or of a fill level measurement device according to any of claims 4 to 9 for determining a viscosity and/or density of a moving liquid.

11. Use of an antenna apparatus according to any of claims 1 to 3 or of a fill level measurement device according to any of claims 4 to 9 for determining a mass flow of a bulk material on a conveyor belt.

12. Method for determining the topology of a surface of a filling material or bulk material, comprising the steps of:
charging a first energy store (205) arranged in a rotatable region of a fill level measurement device (201),
charging a second energy store (203) arranged in a stationary region of the fill level measurement device;
rotating an antenna unit (111) of the fill level measurement device using the energy stored in the second energy store;
generating and transmitting a measurement signal using the energy stored in the first energy store;
receiving the measurement signal reflected from the surface;
computing the topology of the surface from the reflected measurement signal.

13. Method according to claim 12, further comprising the step of:
transmitting measured values produced from the computation to a remote control unit by means of a data line, by means of which the energy stores (203, 205) are supplied with the energy required for the measurement operation.

## Revendications

1. Dispositif d'antenne pour raccordement à un appareil de mesure de niveau de remplissage (201), le dispositif d'antenne comprenant :
une unité d'antenne (111) pour l'émission d'un signal de mesure dans la direction d'une surface de produit et pour la réception du signal de mesure réfléchi sur la surface du produit ;
un axe d'entraînement (109) pour la rotation de l'unité d'antenne autour de l'axe d'entraînement pendant l'émission du signal de mesure ;
un premier accumulateur d'énergie (205) pour l'alimentation du dispositif d'antenne avec l'énergie électrique nécessaire au fonctionnement de celui-ci ;
dans lequel l'unité d'antenne comporte une matrice d'éléments radiants, laquelle est réalisée pour l'émission du signal de mesure et pour la réception du signal de mesure réfléchi ; et
dans lequel le premier accumulateur d'énergie est monté sur le dispositif d'antenne, de sorte qu'il tourne avec l'antenne lorsque celle-ci est déplacée en rotation par l'axe d'entraînement.

2. Dispositif d'antenne selon la revendication 1, comportant en outre :
une unité haute fréquence (110) pour la production du signal de mesure.

3. Dispositif d'antenne selon la revendication 2,
dans lequel l'unité haute fréquence (110) est intégrée dans l'unité d'antenne (111) ou est montée sur l'unité d'antenne.

4. Appareil de mesure de niveau de remplissage (201) pour la détermination de la topologie d'une surface d'un produit de remplissage ou d'un produit en vrac, comprenant :
un corps principal (212) doté d'une unité de communication et d'alimentation en énergie (102) et d'un moteur électrique (103) ;
un dispositif d'antenne selon l'une des revendications 1 à 3 ;
dans lequel l'axe d'entraînement (109) du dispositif d'antenne est réalisé pour le raccordement au moteur électrique.

5. Appareil de mesure de niveau de remplissage (201) selon la revendication 4, comprenant en outre :
une interface de communication et d'alimentation en énergie (210) pour le raccordement de l'unité de communication et d'alimentation en énergie (102) à une ligne bifilaire, par le biais de laquelle l'appareil de mesure de niveau de remplissage (201) peut être alimenté avec l'énergie nécessaire pour le mode de mesure et par le biais de laquelle les données de mesure peuvent être transmises à une unité de commande distante (211).

6. Appareil de mesure de niveau de remplissage (201) selon la revendication 4 ou 5, comprenant en outre :
une première paire de bobines stator-rotor (105, 120) pour la transmission sans fil de l'énergie nécessaire au chargement du premier accumulateur d'énergie (205) depuis l'unité de communication et d'alimentation en énergie (102) du corps principal (212) au dispositif d'antenne.

7. Appareil de mesure de niveau de remplissage (201) selon l'une des revendications 4 à 6, comprenant en outre :
une deuxième paire de bobines stator-rotor (105, 120) pour la transmission sans fil du signal de mesure reçu par le dispositif d'antenne depuis le dispositif d'antenne à l'unité de communication et d'alimentation en énergie (102) du corps principal (212).

8. Appareil de mesure de niveau de remplissage (201) selon l'une des revendications 4 à 7, comprenant en outre :
un deuxième accumulateur d'énergie (203) pour l'alimentation du moteur électrique (103) avec l'énergie électrique nécessaire à la rotation de l'unité d'antenne (111).

9. Appareil de mesure de niveau de remplissage (201) selon l'une des revendications 4 à 8,
dans lequel l'unité de communication et d'alimentation en énergie (102) du corps principal (212) est réalisée pour le chargement du premier accumulateur d'énergie (205) et du deuxième accumulateur d'énergie (203) avant le début d'une mesure.

10. Utilisation d'un dispositif d'antenne selon l'une des revendications 1 à 3 ou d'un appareil de mesure de niveau de remplissage selon l'une des revendications 4 à 9 pour la détermination d'une viscosité et/ou d'une masse volumique d'un fluide déplacé.

11. Utilisation d'un dispositif d'antenne selon l'une des revendications 1 à 3 ou d'un appareil de mesure de niveau de remplissage selon l'une des revendications 4 à 9 pour la détermination d'un débit massique d'un produit en vrac se trouvant sur une bande convoyeuse.

12. Procédé de détermination de la topologie d'une surface d'un produit de remplissage ou d'un produit en vrac, le procédé comprenant les étapes :
chargement d'un premier accumulateur d'énergie (205), lequel est agencé dans une zone tournante d'un appareil de mesure de niveau de remplissage (201) ;
chargement d'un deuxième accumulateur d'énergie (203), lequel est agencé dans une zone stationnaire de l'appareil de mesure de niveau de remplissage ;
rotation d'une unité d'antenne (111) de l'appareil de mesure de niveau de remplissage en utilisant l'énergie stockée dans le deuxième accumulateur d'énergie ;
production et émission d'un signal de mesure en utilisant l'énergie stockée dans le premier accumulateur d'énergie ;
réception du signal de mesure réfléchi sur la surface ;
calcul de la topologie de la surface à partir du signal de mesure réfléchi.

13. Procédé selon la revendication 12, comprenant en outre les étapes :
transmission de valeurs de mesure résultant du calcul à une unité de commande agencée à distance par le biais d'une ligne de données, par le biais de laquelle les accumulateurs d'énergie (203, 205) sont alimentés avec l'énergie nécessaire pour le mode de mesure.
